# EUROPÄISCHE PATENTSCHRIFT

(11) **EP 2 110 013 B1**
(45) Veröffentlichungstag und Bekanntmachung des Hinweises auf die Patenterteilung: **16.11.2011**
(21) Anmeldenummer: 09005087.3
(22) Anmeldetag: 07.04.2009
(51) Int. Cl.: A01D 41/127, A01D 43/08, A01D 75/18

(54) **Landwirtschaftliche Maschine mit Nothaltfunktion**
Agricultural machine with emergency stop function
Machine agricole dotée d'une fonction d'urgence

(30) Priorität: 14.04.2008 DE 102008018877
(43) Veröffentlichungstag der Anmeldung: 21.10.2009
(73) Patentinhaber: CLAAS Selbstfahrende Erntemaschinen GmbH, 33426 Harsewinkel (DE)
(72) Erfinder: Deppe, Markus, 33790 Halle (DE); Jeppe, Eckehard, 34289 Zierenberg (DE)
(74) Vertreter: Heuer, Wilhelm

(56) Entgegenhaltungen:
- DE-A1- 10 064 860
- DE-A1- 10 208 984
- US-B1- 6 198 992

## Beschreibung

Die vorliegende Erfindung betrifft die Steuerung einer selbstfahrenden landwirtschaftlichen Maschine mit wenigstens einem bei fahrender Maschine betreibbaren Arbeitsaggregat, insbesondere einer Erntemaschine.

Im Fahrbetrieb einer landwirtschaftlichen Maschine können Situationen auftreten, die einen schnellen Halt der Maschine und des Arbeitsaggregats erforderlich machen, z.B. um zu verhindern, dass die Maschine Fremdmaterial aufnimmt, das zur Beschädigung des Arbeitsaggregats führen oder dessen Beseitigung aus dem Arbeitsaggregat eine störende Verzögerung der Arbeit bewirken würde, oder um zu vermeiden, dass unvermittelt im Fahrweg der Maschine auftauchende Personen oder Tiere verletzt oder gar getötet werden. Zwar ist z.B. aus DE 100 64 860 A1 bekannt, in den Einzugsorganen einer selbstfahrenden Erntemaschine einen Metalldetektor vorzusehen, der bei Ansprechen ein Nothaltsignal auslöst, doch setzt dies voraus, dass das Metall in die Einzugsorgane hineingelangt; es muss daher, bevor der Erntebetrieb weitergehen kann, aus dem Einzugskanal beseitigt werden. Eine Unterbrechung des Erntebetriebs ist daher unvermeidlich.

In der Praxis kommt es häufig vor, dass der Fahrer einer Erntemaschine ein vorausliegendes Hindernis erkennt, bevor es von den Einzugsorganen der Erntemaschine erfasst wird. In diesem Fall muss er zum einen so schnell wie möglich die Maschine zum Stillstand bringen, um nach Möglichkeit den Kontakt der Maschine mit dem Hindernis zu vermeiden, und zum anderen schnellstmöglich das Arbeitsaggregat anhalten, damit, falls ein Kontakt mit dem Hindernis nicht mehr vermeidbar ist, Material des Hindernisses möglichst wenig weit in die Maschine eingezogen wird, um eine mögliche Schädigung der Maschine gering zu halten und ggf. eine schnelle Beseitigung des Materials zu ermöglichen. Da die Fahrbewegung der Maschine unabhängig vom Betrieb des Arbeitsaggregats steuerbar sein muss, sind zwei Steuereingriffe des Fahrers erforderlich, um Maschine und Arbeitsaggregat zum Stillstand zu bringen, was die Zeitspanne zwischen der Erkennung des Hindernisses und dem Stillstand des Arbeitsaggregats verlängert und die Gefahr des Eindringens des Fremdmaterials erhöht.

DE 102 08 984 A1 schlägt eine Steuerung für einen Mähdrescher vor, bei der ein Steuerhebel, der eine Sollgeschwindigkeit des Mähdreschers definiert, sowohl von Hand als auch über Steuermotoren verstellbar ist, um eine von einem Automaten als optimal beurteilte Fahrgeschwindigkeit einzustellen. Eine manuelle Verstellung, die von der als optimal beurteilten Geschwindigkeit abweicht, muss den Widerstand des Steuermotors überwinden, so dass es schwierig ist, einen Nothalt des Mähdreschers über den Steuerhebel zu erzwingen. Eine Notstoppfunktion ist daher über einen von dem Steuerhebel verschiedenen Schalter auslösbar. Um diesen zu betätigen, muss der Fahrer umgreifen, was einen unerwünschten Zeitverlust mit sich bringt.

Es besteht daher Bedarf nach einer selbstfahrenden landwirtschaftlichen Maschine, die es erlaubt, in einem Notfall sowohl die Fahrbewegung der Maschine als auch den Betrieb eines Arbeitsaggregats der Maschine ohne unnötigen Zeitverlust zu stoppen.

Dieses Ziel wird erfindungsgemäß erreicht, indem bei einer selbstfahrenden landwirtschaftlichen Maschine mit einem Fahrantrieb, einem von einem Fahrer bewegbaren Steuerelement zum Steuern der Fahrgeschwindigkeit der Maschine und wenigstens einem Arbeitsaggregat, das bei fahrender Maschine nach Wahl des Fahrers einen aktiven und einen inaktiven Zustand einnehmen kann, die Maschine eingerichtet ist, zu entscheiden, ob eine erfasste Bewegung des Steuerelements eine reguläre Steuerbewegung oder eine Notfallbewegung ist, und das Arbeitsaggregat in den inaktiven Zustand zu überführen, wenn entschieden wird, dass die erfasste Bewegung eine Notfallbewegung ist.

Einer ersten Ausgestaltung zufolge ist das Steuerelement ein Fahrhebel, der in wenigstens einem Freiheitsgrad in einer ersten Richtung bewegbar ist, um die Fahrgeschwindigkeit der Maschine zu erhöhen und in der entgegengesetzten Richtung bewegbar ist, um die Fahrgeschwindigkeit zu reduzieren. Vorzugsweise ist der Fahrhebel vom aus DE 101 40 975 A1 bekannten Typ mit in den Griff des Fahrhebels integrierten Bedienelementen, die über die Fahrgeschwindigkeit hinaus die Steuerung weiterer Funktionen der Maschine erlauben.

Zweckmäßigerweise ist die Maschine eingerichtet, die Geschwindigkeit einer Bewegung des Fahrhebels in dem einen Freiheitsgrad zu erfassen und die Bewegung als Notfallbewegung zu beurteilen, wenn die Geschwindigkeit einen Grenzwert übersteigt. Als eine weitere Bedingung für die Beurteilung einer Bewegung als Notfallbewegung kann vorgesehen sein, dass die Richtung der Bewegung einer Verringerung der Fahrgeschwindigkeit entspricht. Denkbar ist aber auch, jede hinreichend schnelle, eventuell durch ein unwillkürlichens Zusammenzucken des Fahrers verursachte Bewegung des Fahrhebels, unabhängig von ihrer Richtung, als Notfallbewegung zu beurteilen, da insbesondere im Betrieb auf dem Feld keine Situationen vorkommen, die ein abruptes Beschleunigen, etwa für eine schnelle Flucht der Maschine aus einer Gefährdungszone, erfordern.

Der Grenzwert der Geschwindigkeit des Fahrhebels, oberhalb derer eine Bewegung als Notfallbewegung eingestuft wird, hängt natürlich im Einzelfall vom Bewegungswiderstand bzw. der trägen Masse des Fahrhebels ab. Generell hat sich ein Minimalwert von 300 mm/s und ein Maximalwert von 600 mm/s für diese Geschwindigkeit als zweckmäßig und realistisch erwiesen.

Wenn jeder Stellung des Steuerelements ein Sollwert der Fahrzeuggeschwindigkeit zugeordnet ist, wie bei dem bekannten Fahrhebel der Fall, dann kann unabhängig von der Geschwindigkeit des Steuerelements eine Bewegung des Steuerelements als Notfallbewegung erfasst werden, wenn die Abweichung zwischen der aktuellen Geschwindigkeit des Fahrzeugs und der der aktuellen Stellung des Steuerelements entsprechende Sollgeschwindigkeit einen Grenzwert übersteigt. Mit anderen Worten wird eine Bewegung des Steuerelements dann als Notfallbewegung beurteilt, wenn sie so schnell ist, dass die tatsächliche Fahrgeschwindigkeit der Maschine der Sollwertänderung nicht zu folgen vermag.

Das Steuerelement kann auch ein an sich bekanntes Bremspedal sein.

In diesem Fall kann die Maschine eingerichtet sein, Geschwindigkeit einer Bewegung des Bremspedals zu erfassen und die Bewegung als Notfallbewegung zu beurteilen, wenn die Geschwindigkeit einen Grenzwert übersteigt.

Alternativ kann die Maschine eingerichtet sein, einen Bremsdruck in einem von dem Bremspedal betätigten Bremskreis zu erfassen und eine Bewegung als Notfallbewegung zu beurteilen, wenn die Geschwindigkeit des von ihr verursachten Druckanstiegs einen Grenzwert übersteigt. Diese Lösung ist im Allgemeinen preiswert realisierbar, da für den öffentlichen Straßenverkehr zugelassene Fahrzeuge im Allgemeinen ohnehin über einen Bremsdrucksensor verfügen, um Bremsleuchten am Fahrzeugheck zu steuern, und der mit minimalem zusätzlichem Aufwand für die oben beschriebene Beurteilung der Bremspedalbewegung nutzbar gemacht werden kann.

Der für die Beurteilung einer Bewegung als Notfallbewegung relevante Grenzwert ist vorzugsweise durch den Fahrer einstellbar. So kann einerseits der Fahrer für ein sicheres Ansprechen der Notfallbewegungserkennung sorgen; zum anderen kann die Einstellmöglichkeit für ihn eine Veranlassung bieten, sich mit der Funktionsweise der Notfallbewegungserkennung und dem Verhalten der Maschine bei Erkennung eines Notfalls vertraut zu machen, bevor ein echter Notfalls eintritt, was die Sicherheit der Maschine weiter verbessert.

Wenn die selbstfahrende landwirtschaftliche Maschine eine Erntemaschine ist, ist das Arbeitsaggregat vorzugsweise vorgesehen, um im aktiven Zustand bei fahrender Maschine Erntegut zu handhaben.

Während einer Überführung des Arbeitsaggregats in den inaktiven Zustand ist der Erntegutdurchsatz des Arbeitsaggregats vorzugsweise proportional zur Fahrgeschwindigkeit der Maschine gesteuert. Dies verhindert zum einen, dass Erntegut bei einem Nothalt überfahren wird, ohne aufgenommen zu werden. Die Dichteverteilung des Erntegutstroms im Innern der Maschine verändert sich deshalb durch den Nothalt nicht, so dass die Maschine nach Beseitigung des Hindernisses sofort und von der Stelle aus, an der sie zum Stillstand gekommen ist, wieder anfahren kann. Es wird kein Erntegut auf dem Feld überfahren oder vor der Maschine zusammengeschoben, was zu Schwierigkeiten beim Wiederanfahren der Maschine und zu Verlusten an Erntegut führen würde.

Wenn das Arbeitsaggregat eine höhenverstellbare Aufnahmeeinrichtung für Erntegut umfasst, ist diese vorzugsweise im aktiven Zustand abgesenkt, um Erntegut aufnehmen zu können, und im inaktiven Zustand ist sie angehoben, um einen Zusammenstoß mit bodennahen Hindernissen zu vermeiden und die Aufnahme des Ernteguts zu unterbrechen.

Das Arbeitsaggregat kann ferner ein Förderelement für Erntegut umfassen, das im aktiven Zustand angetrieben und im inaktiven Zustand in Ruhe ist.

Vorzugsweise ist das Arbeitsaggregat im aktiven Zustand an einen Antrieb gekoppelt und in dem inaktiven Zustand von dem Antrieb abgekoppelt. So ist es möglich, den Antrieb unabhängig vom Betrieb des Arbeitsaggregats auch für andere Zwecke wie etwa zum Antreiben der Fahrbewegung einzusetzen.

Bei der selbstfahrenden Maschine kann es sich insbesondere um einen Mähdrescher oder einen Feldhäcksler handeln.

Um Verluste beim Überladen von Erntegut von der selbstfahrenden Erntemaschine in ein Begleitfahrzeug zu vermeiden oder wenigstens gering zu halten, ist es sinnvoll, die Bewegung des Begleitfahrzeugs mit der der Maschine auch bei einem Nothalt synchronisieren zu können. Hierfür weist die Maschine zweckmäßigerweise eine Schnittstelle zum Übermitteln einer die Erfassung einer Notfallbewegung anzeigenden Notfallmeldung an ein die Maschine begleitendes Fahrzeug auf, und das begleitende Fahrzeug hat eine hierzu komplementäre Schnittstelle zum Empfangen einer Notfallmeldung von der Maschine und ist eingerichtet, bei Empfang der Notfallmeldung einen Nothalt durchzuführen.

Weitere Merkmale und Vorteile der Erfindung ergeben sich aus der Beschreibung von Ausführungsbeispielen unter Bezugnahme auf die beigefügten Zeichnungen. Es zeigen:
- Fig. 1: eine schematische Darstellung eines Mäh- dreschers gemäß der Erfindung;
- Fig. 2: ein Flussdiagramm eines in einer Steuer- einheit des Mähdreschers ablaufenden Steu- erprozesses;
- Fig. 3: ein Flussdiagramm eines alternativen Steu- erprozesses; und
- Fig. 4: eine schematische Darstellung eines Feld- häckslers gemäß der Erfindung.

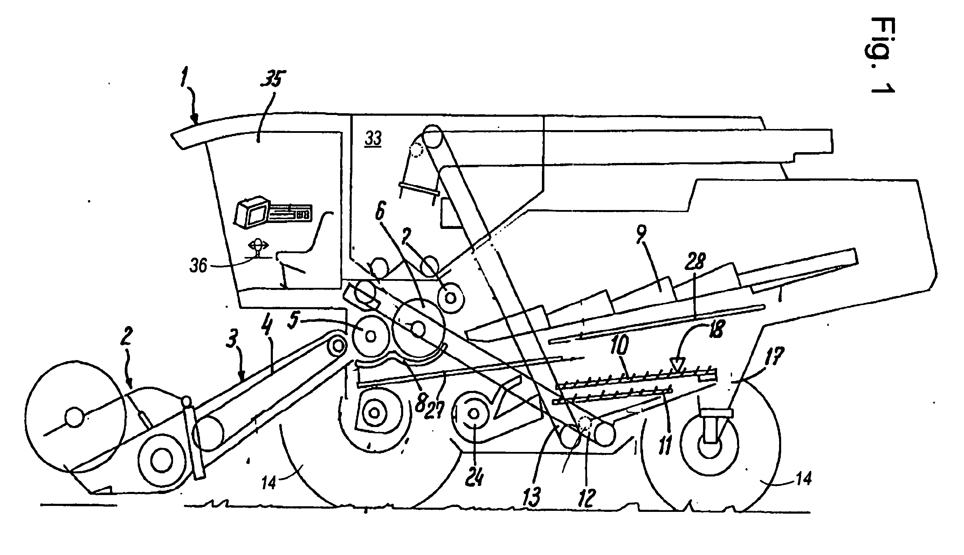

Der in Figur 1 gezeigte Mähdrescher 1 hat ein Fahrgestell mit vier Rädern und diverse Arbeitsaggregate, darunter einen Erntevorsatz 2, der im allgemeinen breiter als das Fahrgestell ist, zum Schneiden und Zusammenführen des Ernteguts quer zur Fahrtrichtung, ein Schrägförderer 3, der das geschnittene Erntegut in das Innere des Mähdreschers befördert und hierfür an umlaufenden endlosen Einzugsketten 4 befestigte Querstege aufweist, die das Erntegut über eine ansteigende Bodenplatte des Schrägförderers 3 hinweg schleifen, eine Vorbeschleunigertrommel 5, die das Erntegut vom Schrägförderer 3 übernimmt, eine Dreschtrommel 6, die das Erntegut durch einen Spalt zwischen ihr und einem ortsfesten Dreschkorb 8 befördert und dabei durch Schlagen und Reiben Körner aus dem Erntegut löst, die durch den Dreschkorb 8 hindurch auf einen Vorbereitungsboden 27 gelangen. Von der Dreschtrommel 6 abgegebenes Stroh wird durch eine Wendetrommel 7 auf mehrere über die Arbeitsbreite nebeneinander angeordnete Schüttler 9 umgelenkt. Eine Schwingbewegung der Schüttler 9 sowie deren stufenförmige Ausbildung bewirken eine Förderung des Strohs zum hinteren Ende des Mähdreschers hin sowie eine Abscheidung von noch im Stroh befindlichem Korn, welches durch die Schüttler 9 hindurch auf einen Rücklaufboden 28 gelangt und durch eine Schwingbewegung desselben zum Vorbereitungsboden 27 weiter befördert wird. Der Vorbereitungsboden 27 hat eine gestufte Oberfläche, so dass durch eine Schüttelbewegung des Vorbereitungsbodens 27 das darauf befindliche, mit Beimengungen wie Strohstücke, Spreu und Ährenteile durchsetzte Korn hangaufwärts gefördert und schließlich auf ein von einem Reinigungsgebläse 24 angeströmtes Obersieb 10 übergeben wird. Während das Korn vom Vorbereitungsboden 27 auf das Obersieb 10 fällt, werden Beimengungen vom Luftstrom des Gebläses 24 fortgetragen und am Heck des Mähdreschers ausgeworfen. Während das Korn durch das schüttelbewegte Obersieb 10 hindurchtritt, wandern Beimengungen, die zu groß sind, um das Obersieb 10 zu passieren, insbesondere Ährenbruchstücke, zu einer Überkehr 17 am heckseitigen Ende des Obersiebs 10, von wo sie durch einen Überkehrelevator 12 der Dreschtrommel 6 wieder zugeführt werden. Der Reinigungsvorgang wiederholt sich in analoger Weise auf einem unter dem Obersieb 10 angeordneten Untersieb 11. Korn, das beide Siebe 10, 11 passiert hat, gelangt über einen Kornelevator 13 in einen Korntank 33.

In der Fahrerkabine 35 ist zur Steuerung der Fahrbewegung des Mähdreschers 1 und des Erntebetriebs ein Fahrhebel 36 angeordnet. An einem in Fahrtrichtung vor und zurück verschiebbaren Griff des Fahrhebels 36 sind Bedienelemente zur Steuerung diverser weiterer Funktionen des Mähdreschers angeordnet. Zu diesen Funktionen kann beispielsweise eine Höhenverstellung des Erntevorsatzes 2 oder der Betrieb der diversen internen Arbeitsaggregate wie etwa Erntevorsatz 2, Schrägförderer 3, Vorbeschleunigertrommel 5, Dreschtrommel 6, Wendetrommel 7, Schüttler 9, Siebe 10, 11, Vorbereitungsboden 27 und Rücklaufboden 28 des Mähdreschers gehören.

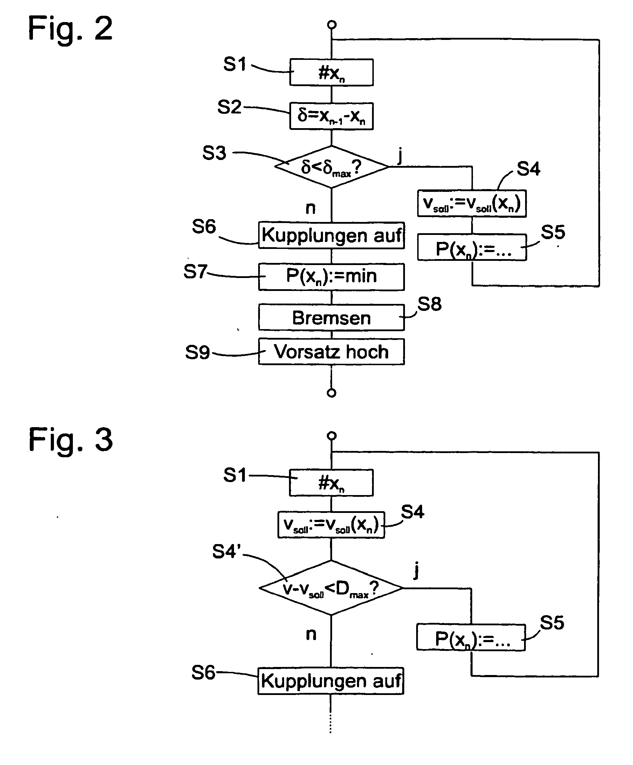

Wenn der Fahrer während des Erntebetriebs vor dem Erntevorsatz 2 Personen, Tiere oder Gegenstände erblickt, die nicht von dem Erntevorsatz 2 erfasst werden dürfen, so ist seine reflexmäßige Reaktion, zunächst den Fahrhebel 36 zurück zu reißen, um den Mähdrescher 1 möglichst schnell zum Stehen zu bringen. Weitere Schutzmaßnahmen wie etwa das Anheben des Erntevorsatzes 2, das Anhalten der Schneidmesser des Erntevorsatzes 2 oder dergleichen durch Betätigen eines entsprechenden Bedienelements erfordern zusätzliche Zeit, selbst wenn diese Bedienelemente an dem Griff des Fahrhebels 36 angebracht sind. Um derartige Zeitverluste zu minimieren, führt eine (nicht dargestellte) Steuerschaltung, die einerseits mit dem Fahrhebel 36 und andererseits mit einem Antriebsmotor des Mähdreschers 1 funktionsmäßig verbunden ist, periodisch das in dem Flussdiagramm der Figur 2 dargestellte Verfahren aus.
Im Schritt S1 der n-ten Wiederholung des Verfahrens fragt die Steuerschaltung die aktuelle Stellung xₙ des Fahrhebels über einen CAN-Bus ab.

In Schritt S2 berechnet sie die Differenz δ zwischen der Stellung xₙ und einer in der vorhergehenden Wiederholung erfassten Stellung xₙ₋₁. Ist diese Differenz δ kleiner als ein fest vorgegebener oder vom Benutzer ausgewählter Schwellwert δₘₐₓ, der typischerweise in einem Wertebereich zwischen 300 mm/s und 600 mm/s liegt, so erkennt die Steuerschaltung in Schritt S3, dass der Mähdrescher sich im Normalbetrieb befindet, und legt eine neue Sollgeschwindigkeit vₛₒₗₗ(xₙ) des Mähdreschers anhand einer in der Steuerschaltung gespeicherten Kennkurve vₛₒₗₗ (x) fest (S4).

Der Schwellwert δₘₐₓ kann eine Konstante sein, er kann aber auch als eine ansteigende Funktion von xₙ definiert sein, um sicher zu stellen, dass auch bei kleiner Auslenkung des Fahrhebels 36 aus der Neutralstellung der Stellwert überschritten und ein Nothalt ausgelöst werden kann.

Die Steuerschaltung legt in Schritt S5 die Leistung des Antriebsmotors fest, um die Differenz zwischen dieser neuen Sollgeschwindigkeit vₛₒₗₗ(xₙ) und der aktuellen tatsächlichen Geschwindigkeit vᵢₛₜ(xₙ) des Mähdreschers zu minimieren und so die Fahrgeschwindigkeit des Mähdreschers gemäß dem Fahrerwunsch zu regeln.

Falls jedoch die Steuerschaltung in Schritt S3 erkennt, dass die Differenz δ größer als der Schwellwert δₘₐₓ ist, so wird angenommen, dass eine Notfallsituation vorliegt, in der sowohl der Mähdrescher 1 als auch seine Arbeitsaggregate schnellstmöglich zum Stehen zu bringen sind. In diesem Fall öffnet die Steuerschaltung eine Kupplung zwischen dem Antriebsmotor und den Rädern 14 sowie zwischen dem Antriebsmotor und den Arbeitsaggregaten, setzt die Leistung des Antriebsmotors auf einen zum Verhindern des Motorstillstands erforderlichen Mindestwert und betätigt Bremsen an den Rädern 14. (S6 bis S8). Infolge der automatischen Notfallerkennung kommen die Arbeitsaggregate, insbesondere die Schneidmesser des Erntevorsatzes 2, binnen kürzester Zeit zum Stillstand. Indem zweckmäßigerweise gleichzeitig noch der Erntevorsatz 2 angehoben wird (S9), wird verhindert, dass Erntegut, das in der Zeitspanne zwischen dem Stillstand der Messer des Erntevorsatzes 2 und dem Anhalten des Mähdreschers 1 überfahrenes Erntegut flach gedrückt wird, und auch die Gefahr eines Kontaktes des Erntevorsatzes 2 mit dem Hindernis ist verringert. Nach Beseitigung des Hindernisses kann der Erntebetrieb daher in den meisten Fällen wieder aufgenommen werden, indem der Mähdrescher 1 auf die bereits abgeerntete Fläche zurück gesetzt und der Erntevorsatz 2 wieder abgesenkt wird.

Falls als Grund für den Nothalt ausschließlich ein vorausliegendes und vom Mähdrescher 1 noch nicht erfasstes Hindernis in Betracht käme, könnte es ausreichen, als einziges Arbeitsaggregat den Erntevorsatz 2 anzuhalten und daran anschließende Aggregate wie etwa den Schrägförderer 3 und die Dreschtrommel 6 weiterlaufen zu lassen. Dies kommt insbesondere dann in Betracht, wenn die nachgeordneten Arbeitsaggregate an geeigneter Stelle mit Sensoren zur Erfassung von Fremdkörpern ausgestattet sind, die in der Lage sind, gegebenenfalls einen Nothalt der Arbeitsaggregate und des gesamten Mähdreschers auszulösen. Falls derartige Sensoren nicht vorhanden oder nicht in der Lage sind, sämtliche möglichen Anlässe für einen Nothalt zu erfassen, ist die Steuerschaltung zweckmäßigerweise ausgelegt, zusammen mit dem Erntevorsatz 2 auch den Schrägförderer 3, die Vorbeschleunigertrommel 5, die Dreschtrommel 6 und die Wendetrommel 7 zu stoppen. Daran anschließende Arbeitsaggregate wie der Schüttler 9 und die Siebe 10, 11 können der Einfachheit halber mit gestoppt werden, es kann aber auch vorgesehen werden, dass diese weiterlaufen, da eingedrungenes Fremdmaterial, wenn es diese Aggregate erreicht hat, sie im allgemeinen nicht beschädigen wird und durch den normalen Betrieb dieser Aggregate wieder vom Korn getrennt wird.

Figur 3 zeigt ein Flussdiagramm eines alternativen Steuerungsverfahrens. Wie im Verfahren von Figur 2 wird zunächst in Schritt S1 die Stellung xₙ des Fahrhebels 36 erfasst. Dieser Stellung wird in Schritt S4 die Sollgeschwindigkeit vₛₒₗₗ zugeordnet. In Schritt S4' wird überprüft, ob die Differenz zwischen der aktuellen Geschwindigkeit v des Mähdreschers 1 und der Sollgeschwindigkeit vₛₒₗₗ unter einer maximal zulässigen Differenz Dₘₐₓ bleibt. Wenn ja, handelt es sich um Normalbetrieb, und die Leistung des Antriebs wird wie oben beschrieben in Schritt S5 angepasst. Bei Überschreitung des Grenzwerts Dₘₐₓ wird ein Notfall angenommen, und es folgen die Schritte S6 bis S9.

Die Verfahren der Figuren 2, 3 sind miteinander kombinierbar, indem der Schritt S4' zwischen die Schritte S4 und S5 in Figur 2 eingeschoben wird.

Anstelle der Position des Fahrhebels 36 kann auch die Position eines (nicht dargestellten) Bremspedals überwacht und ein Nothaltvorgang mit den Schritten S6 bis S9 ausgelöst werden, wenn die Geschwindigkeit, mit der das Bremspedal getreten wird (beziehungsweise, analog zu Schritt S2, die Differenz zwischen zwei Bremspedalpositionen aufeinanderfolgender Iterationen des Verfahrens) einen Grenzwert überschreitet. Als Kriterium für die Auslösung eines Nothalts kommt ferner bei einem Bremssystem mit in herkömmlicher Weise hydraulisch angesteuerten Bremsen die Überschreitung eines Druckgrenzwerts in der Bremsflüssigkeit des Bremssystems in Betracht.

In einer bevorzugten Ausgestaltung der Erfindung ist der gleiche Nothaltvorgang sowohl über den Fahrhebel 36 als auch über das Bremspedal auslösbar.

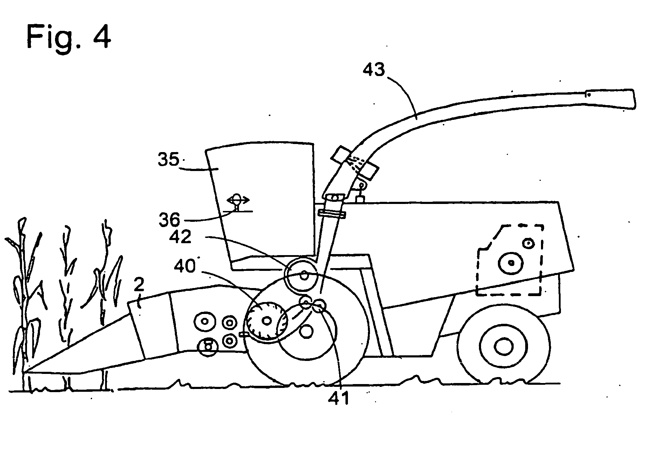

Die Erfindung ist ohne weiteres übertragbar auf andere selbstfahrende landwirtschaftliche Maschinen wie insbesondere einen in Figur 4 schematisch dargestellten Feldhäcksler. Dieser hat als Arbeitsaggregate insbesondere einen Erntevorsatz 2 zum Schneiden von Erntegut, insbesondere Mais, und eine Häckseltrommel 40, der das geschnittene Erntegut zugeführt wird. In der Häckseltrommel 40 zerkleinertes Erntegut gelangt über ein Paar von Konditionierwalzen 41, zwischen denen beim Durchgang durch die Häckseltrommel 40 intakt gebliebene Maiskörner zerrieben werden, und einen Nachbeschleuniger 42 in einen Auswurfkrümmer 43 und über diesen in einen Lagerraum eines im Erntebetrieb neben dem Feldhäcksler herfahrenden Begleitfahrzeugs. Auch hier überwacht eine Steuerschaltung, wie oben mit Bezug auf Figuren 2 und 3 beschrieben, die Stellung eines Fahrhebels 36 in der Fahrerkabine 35 sowie gegebenenfalls die Betätigung eines Bremspedals. Die Steuerschaltung ist hier zusätzlich mit einer Funkschnittstelle für die Kommunikation mit dem Begleitfahrzeug ausgestattet.

Wenn eines der mit Bezug auf Figur 2 oder 3 beschriebenen Kriterien für einen Nothalt erfüllt ist, bremst die Steuerschaltung den Feldhäcksler und stoppt dessen Arbeitsaggregate 2, 40, 41, 42. Hier ist es besonders wichtig, dass sämtliche Arbeitsaggregate gestoppt werden und kein Erntegut mehr auf das Begleitfahrzeug übergeladen wird, da der Feldhäcksler im Gegensatz zum Mähdrescher Fremdmaterial nicht ausscheidet. Versehentlich aufgenommene Metallteile würden daher, wenn die Arbeitsaggregate nicht umgehend gestoppt würden, mit dem Erntegut in das Begleitfahrzeug übergeladen und würden eine erhebliche Gefährdung für Vieh darstellen, an das das Erntegut verfüttert wird. Indem die Steuerschaltung die Arbeitsaggregate gleichzeitig mit der Fahrbewegung des Feldhäckslers stoppt, ist die Wahrscheinlichkeit, dass gefährliches Fremdmaterial übergeladen wird, minimiert.

Um ein Uberladen von Metallteilen zu verhindern, ist einer weiterentwickelten Ausgestaltung zufolge ein Metalldetektor im Erntevorsatz 2 oder an anderer geeigneter Stelle vorgesehen, der bei Erfassung von Metall im Erntegut einen sofortigen Stopp der Schneidmesser, der Häckseltrommel 40, der Konditionierwalzen 41 und des Nachbeschleunigers 42 auslöst. Diese Aggregate können in kürzerer Zeit gestoppt werden als die Fahrbewegung des Feldhäckslers. Wenn hingegen der Fahrer durch Betätigung des Fahrhebels 36 oder des Bremspedals einen Nothalt auslöst, werden die Schneidmesser und die Häckseltrommel 40 synchron zur Fahrbewegung verzögert. Auf diese Weise wird ein Überfahren des Ernteguts vor dem Stillstand verhindert, und der Erntebetrieb kann nach dem Stillstand unmittelbar wieder aufgenommen werden.

Der Nothaltprozess umfasst beim Feldhäcksler zusätzlich zu den Schritten S6 bis S9 der Figur 2 einen weiteren Schritt des Ausgebens einer Nothaltmeldung an das Begleitfahrzeug über die Funkschnittstelle. Indem das mit einer komplementären Funkschnittstelle ausgerüstete Begleitfahrzeug bei Empfang dieser Meldung ebenfalls einen Nothalt ausführt, werden Feldhäcksler und Begleitfahrzeug im wesentlichen gleichmäßig verzögert, so dass auch während des Abbremsens das Begleitfahrzeug seine Position unterhalb einer Ausgabeöffnung des Auswurfkrümmers 43 beibehält und keine Verluste an gehäckseltem Erntegut auftreten.

Eine Tempomat- oder Autopilotfunktion, die während des normalen Erntebetriebs die Geschwindigkeit des Feldhäckslers und/oder des Begleitfahrzeugs konstant hält und es so dem Begleitfahrzeug erleichtert, synchron neben dem Feldhäcksler herzufahren, wird durch den Nothalt außer Kraft gesetzt.

Wenn die Fahrerkabine 35 aktiv gedämpft, das heißt mit steuerbaren Dämpfungsgliedern versehen ist, so erhöht zweckmäßigerweise die Steuerschaltung bei einem Nothalt die Steifigkeit der Dämpfungsglieder, um übermäßig starke, die Bewegungsfreiheit der Kabine 35 überschreitende Nick- und/oder Wankbewegungen zu unterbinden. Abrupte Stöße, die für den Fahrer sehr unangenehm sind und ein Verletzungsrisiko beinhalten können, werden so vermieden.

**Bezugszeichen**
- 1: Mähdrescher
- 2: Erntevorsatz
- 3: Schrägförderer
- 4: Einzugsketten
- 5: Vorbeschleunigertrommel
- 6: Dreschtrommel
- 7: Wendetrommel
- 8: Dreschkorb
- 9: Schüttler
- 10: Obersieb
- 11: Untersieb
- 12: Überkehrelevator
- 13: Kornelevator
- 14: Rad
- 17: Überkehr
- 24: Gebläse
- 27: Vorbereitungsboden
- 28: Rücklaufboden
- 33: Korntank
- 35: Fahrerkabine
- 36: Fahrhebel
- 40: Häckseltrommel
- 41: Konditionierwalze
- 42: Nachbeschleuniger
- 43: Auswurfkrümmer

## Patentansprüche

1. selbstfahrende landwirtschaftliche Maschine mit einem Fahrantrieb, einem von einem Fahrer bewegbaren Steuerelement (36) zum Steuern der Fahrgeschwindigkeit der Maschine und wenigstens einem Arbeitsaggregat (2, 3, 5-13, 24, 27, 28, 40, 41, 42), das bei fahrender Maschine nach Wahl des Fahrers einen aktiven und einen inaktiven Zustand einnehmen kann, **dadurch gekennzeichnet, dass** die Maschine eingerichtet ist, zu entscheiden (S3, S4'), ob eine erfasste Bewegung des Steuerelements (36) eine reguläre Steuerbewegung oder eine Notfallbewegung ist, und das Arbeitsaggregat (2, 3, 5-13, 24, 27, 28, 40, 41, 42) in den inaktiven Zustand zu überführen (S6-S9), wenn entschieden wird, dass die erfasste Bewegung eine Notfallbewegung ist.

2. Maschine nach Anspruch 1, **dadurch gekennzeichnet, dass** das Steuerelement ein Fahrhebel (36) ist, der in wenigstens einem Freiheitsgrad in einer ersten Richtung bewegbar ist, um die Fahrgeschwindigkeit der Maschine zu erhöhen und in der entgegengesetzten Richtung bewegbar ist, um die Fahrgeschwindigkeit zu reduzieren.

3. Maschine nach Anspruch 1 oder 2, **dadurch gekennzeichnet, dass** die Maschine eingerichtet ist, die Geschwindigkeit einer Bewegung des Steuerelements (36) zu erfassen (S2) und die Bewegung als Notfallbewegung zu beurteilen (S3), wenn die Geschwindigkeit einen Grenzwert (Dₘₐₓ) übersteigt (S4').

4. Maschine nach Anspruch 3, **dadurch gekennzeichnet, dass** der Grenzwert mindestens 300 mm/s und/oder höchstens 600 mm/s beträgt.

5. Maschine nach Anspruch 1 oder 2, **dadurch gekennzeichnet, dass** jeder Stellung (x) des Steuerelements (36) ein Sollwert (vₛₒₗₗ) der Fahrgeschwindigkeit der Maschine zugeordnet ist und dass eine Bewegung des Steuerelements (36) als Notfallbewegung erfasst wird (S4'), wenn die Abweichung zwischen der aktuellen Fahrgeschwindigkeit (v) der Maschine und der Sollgeschwindigkeit (vₛₒₗₗ) einen Grenzwert übersteigt.

6. Maschine nach Anspruch 1, **dadurch gekennzeichnet, dass** das Steuerelement ein Bremspedal ist.

7. Maschine nach Anspruch 6, **dadurch gekennzeichnet, dass** die Maschine eingerichtet ist, einen Bremsdruck in einem von dem Bremspedal betätigten Bremskreis zu erfassen und eine Bewegung als Notfallbewegung zu beurteilen, wenn die Geschwindigkeit des von ihr verursachten Druckanstiegs einen Grenzwert übersteigt.
von ihr verursachten Druckanstiegs einen Grenzwert übersteigt.

8. Maschine nach einem der Ansprüche 3 bis 5 oder 7, **dadurch gekennzeichnet, dass** der Grenzwert durch den Fahrer einstellbar ist.

9. Maschine nach einem der vorhergehenden Ansprüche, **dadurch gekennzeichnet, dass** sie eine Erntemaschine ist und dass das Arbeitsaggregat (2, 3, 5-13, 24, 27, 28, 40, 41, 42) vorgesehen ist, um im aktiven Zustand bei fahrender Maschine Erntegut zu handhaben.

10. Maschine nach Anspruch 9, **dadurch gekennzeichnet, dass** während einer Überführung des Arbeitsaggregats (2, 3, 5-13, 24, 27, 28, 40, 41, 42) in den inaktiven Zustand der Erntegutdurchsatz des Arbeitsaggregats proportional zur Fahrgeschwindigkeit der Maschine gesteuert ist.

11. Maschine nach einem der vorhergehenden Ansprüche, **dadurch gekennzeichnet, dass** das Arbeitsaggregat eine Aufnahmeeinrichtung für Erntegut (2), die im aktiven zustand abgesenkt und im inaktiven zustand angehoben ist, und/oder wenigstens ein Förderelement (3) für Erntegut umfasst, das im aktiven Zustand angetrieben und im inaktiven Zustand in Ruhe ist.

12. Maschine nach einem der vorhergehenden Ansprüche, **dadurch gekennzeichnet, dass** das Arbeitsaggregat im aktiven zustand an einen Antrieb gekoppelt und in dem inaktiven Zustand von dem Antrieb abgekoppelt ist.

13. Maschine nach einem der vorhergehenden Ansprüche, **dadurch gekennzeichnet, dass** sie ein Feldhäcksler oder ein Mähdrescher ist.

14. Maschine nach einem der vorhergehenden Ansprüche, **gekennzeichnet durch** eine Schnittstelle zum Übermitteln einer die Erfassung einer Notfallbewegung anzeigenden Notfallmeldung an ein die Maschine begleitendes Fahrzeug.

## Claims

1. Self-propelled agricultural machine with a traction drive, a control element (16) which can be moved by a driver for controlling the driving speed of the machine, and at least one working unit (2, 3, 5-13, 24, 27, 28, 40, 41, 42) which, when the machine is being driven, can, at the discretion of the driver, assume an active and an inactive state, **characterised in that** the machine is equipped to decide (S3, S4') whether a detected movement of the control element (36) is a regular control movement or an emergency movement, and that the working unit (2, 3, 5-13, 24, 27, 28, 40, 41, 42) is switched into the inactive state (S6-S9) if it is decided that the detected movement is an emergency movement.

2. Machine according to claim 1, **characterised in that** the control element is a control lever (36) which, in at least one degree of freedom, can be moved in a first direction in order to increase the driving speed of the machine and in the opposite direction in order to reduce the driving speed.

3. Machine according to claim 1 or 2, **characterised in that** the machine is equipped to detect (S2) the speed of a movement of the control element (36) and to judge the movement to be an emergency movement (S3) if the speed exceeds a limit value (Dₘₐₓ).

4. Machine according to claim 3, **characterised in that** the limit value is at least 300 mm/s and/or a maximum of 600 mm/a.

5. Machine according to claim 1 or 2, **characterised in that** each position (x) of the control element (36) is assigned a setpoint value (vₛₒₗₗ) for the speed of the machine and that a movement of the control element (36) is identified as an emergency movement (S4') if the difference between the current speed (v) of the machine and the setpoint speed (vₛₒₗₗ) exceeds a limit value.

6. Machine according to claim 1, **characterised in that** the control element is a brake pedal.

7. Machine according to claim 6, **characterised in that** the machine is equipped to detect a braking pressure in a brake circuit operated by the brake pedal and to judge a movement to be an emergency movement if the speed of the increase in pressure caused by said movement exceeds a limit value.

8. Machine according to one of the claims 3 to 5 or 7, **characterised in that** the limit value can be adjusted by the driver.

9. Machine according to one of the preceding claims, **characterised in that** it is a harvesting machine and that the working unit (2, 3, 5-13, 24, 27, 28, 40, 41, 42) is provided in order to handle the harvested crop in the active state while the machine is moving.

10. Machine according to claim 9, **characterised in that**, while the working unit (2, 3, 5-13, 24, 27, 28, 40, 41, 42) is being switched into the inactive state, the throughput of the harvested crop through the working unit is controlled proportionally to the driving speed of the machine.

11. Machine according to one of the preceding claims, **characterised in that** the working unit comprises a receiving apparatus for the harvested crop (2), which is lowered in the active state and is raised in the inactive state, and/or at least one conveyor element (3) for the harvested crop which is driven in the active state and is idle in the inactive state.

12. Machine according to one of the preceding claims, **characterised in that**, in the active state, the working unit is coupled to a drive and in the inactive state is decoupled from the drive.

13. Machine according to one of the preceding claims, **characterised in that** it is a forage harvester or a combine harvester.

14. Machine according to one of the preceding claims, **characterised by** an interface for communicating the reception of an emergency signal indicating an emergency movement to a vehicle accompanying the machine.

## Revendications

1. Machine agricole automotrice avec un entraînement de roulement traction, un organe de commande (16) qui peut être déplacé par un conducteur pour commander la vitesse de roulement de la machine et au moins un groupe de traitement (2, 3, 5-13, 24, 27, 28, 40, 41, 42) qui, lorsque la machine rotule, peut, au choix du conducteur, prendre un état actif et un état inactif, **caractérisée en ce que** la machine est équipée pour décider (S3, S4') si un déplacement détecté de l'organe de commande (36) est un déplacement de commande normal ou un déplacement d'urgence, et **en ce que** le groupe de traitement (2, 3, 5-13, 24, 27, 28, 40, 41, 42) passe à l'état inactif (S6-S9) s'il est décidé que le déplacement détecté est un déplacement d'urgence.

2. Machine selon la revendication 1, **caractérisée en ce que** l'organe de commande est un levier de commande (36) qui, dans au moins un degré de liberté, peut être déplacé dans un premier sens afin d'augmenter la vitesse de roulement de la machine et dans le sens opposé afin de réduire la vitesse de roulement.

3. Machine selon la revendication 1 ou 2, **caractérisée en ce que** la machine est équipée pour détecter (S2) la vitesse d'un déplacement de l'organe de commande (36) et pour juger que le déplacement est un déplacement d'urgence (S3) si la vitesse dépasse une valeur limite (Dₘₐₓ) .

4. Machine selon la revendication 3, **caractérisée en ce que** la valeur limite est au moins 300 mm/s et/ou un maximum de 600 mm/s.

5. Machine selon la revendication 1 ou 2, **caractérisée en ce que** chaque position (x) de l'organe de commande (36) est affectée d'une valeur de consigne (vₛₒₗₗ) pour la vitesse de la machine et **en ce qu'**un déplacement de l'organe de commande (36) est identifié comme étant un déplacement d'urgence (S4') si la différence entre la vitesse actuelle (v) de la machine et la vitesse de consigne (vₛₒₗₗ) dépasse une valeur limite.

6. Machine selon la revendication 1, **caractérisée en ce que** l'organe de commande est une pédale de frein.

7. Machine selon la revendication 6, **caractérisée en ce que** la machine est équipée pour détecter une pression de freinage dans un circuit de freinage actionné par la pédale de frein et pour juger qu'un déplacement est un déplacement d'urgence si la vitesse de l'augmentation de pression causée par ledit déplacement dépasse une valeur limite.

8. Machine selon l'une des revendications 3 à 5 ou 7, **caractérisée en ce que** la valeur limite peut être ajustée par le conducteur.

9. Machine selon l'une des revendications précédentes, **caractérisée en ce que** c'est une machine à moissonner et **en ce que** le groupe de traitement (2, 3, 5-13, 24, 27, 28, 40, 41, 42) est prévu pour traiter la récolte moissonnée à l'état actif pendant que la machine roule.

10. Machine selon la revendication 9, **caractérisée en ce que**, pendant que le groupe de traitement (2, 3, 5-13, 24, 27, 28, 40, 41, 42) passe à l'état inactif, le débit de la récolte moissonnée à travers le groupe de traitement est commandé proportionnellement à la vitesse de conduite de la machine.

11. Machine selon l'une des revendications précédentes, **caractérisée en ce que** le groupe de traitement comprend un appareil de réception pour la récolte moissonnée (2), qui est abaissé à l'état actif et est relevé à l'état inactif, et/ou au moins un organe convoyeur (3) pour la récolte moissonnée qui est entraîné à l'état actif et est au repos à l'état inactif.

12. Machine selon l'une des revendications précédentes, **caractérisée en ce que**, à l'état actif, le groupe de traitement est accouplé à un entraînement et à l'état inactif est désaccouplé de l'entraînement.

13. Machine selon l'une des revendications précédentes, **caractérisée en ce que** c'est une moissonneuse à fourrage ou une moissonneuse-batteuse.

14. Machine selon l'une des revendications précédentes, **caractérisée par** une interface pour communiquer la réception d'un signal d'urgence indiquant un déplacement d'urgence à un véhicule accompagnant la machine.
